Europäisches Patentamt

European Patent Office

Office européen des brevets

(19)

(11) Numéro de publication: **0 193 425
B1**

# (12) FASCICULE DE BREVET EUROPEEN

(45) Date de publication du fascicule du brevet:
18.10.89

(21) Numéro de dépôt: 86400146.6

(22) Date de dépôt: 24.01.86

(51) Int. Cl.⁴: **F16L 41/08,** F16L 47/00,
F28F 9/16

(54) Procédé pour la fixation d'un tube mince entre une bague et un manchon tronconiques, et dispositifs pour la mise en oeuvre du procédé.

(30) Priorité: 04.02.85 FR 8501504

(43) Date de publication de la demande:
03.09.86 Bulletin 86/36

(45) Mention de la délivrance du brevet:
18.10.89 Bulletin 89/42

(84) Etats contractants désignés:
BE DE GB IT NL

(56) Documents cités:
FR-A- 2 240 105
FR-A- 2 542 437
US-A- 2 168 631

(73) Titulaire: COMMISSARIAT A L'ENERGIE ATOMIQUE,
31/33, rue de la Fédération, F-75015 Paris(FR)

(72) Inventeur: Bandelier, Philippe, 82 Chemin des
Ayguinards, F-38240 Meylan(FR)
Inventeur: Halotier, Daniel, 23 rue Jean Baptiste
Clément, F-38130 Echirolles(FR)
Inventeur: Lauro, Fernand, 33 rue Thiers,
F-38000 Grenoble(FR)

(74) Mandataire: Mongrédien, André et al, c/o
BREVATOME 25, rue de Ponthieu, F-75008 Paris(FR)

ACTORUM AG

## Description

L'invention concerne un procédé pour la réalisation de la fixation d'un tube mince entre une bague présentant un alésage tronconique et un manchon comportant un diamètre extérieur tronconique adapté à coopérer avec l'alésage de la bague, ainsi que des dispositifs pour la mise en œuvre du procédé de réalisation.

On connaît, en particulier par le FR-A 2 542 437, un dispositif de fixation d'un tube en matière plastique mince sur une bague. Ce dispositif se compose d'une bague pourvue d'une collerette et comportant un alésage intérieur tronconique et, d'autre part, d'un manchon comportant un diamètre extérieur tronconique apte à coopérer avec la bague pour enserrer le tube par coïncement. Cependant, un dispositif de ce type présente des risques de desserrement, tant au montage qu'en cours de fonctionnement sous l'effet de vibrations.

On connaît également (US-A 2 168 631) un procédé pour relier entre eux deux tuyaux à paroi mince qui ne peuvent pas être filetés, ou pour joindre un seul tuyau à un autre élément. Chacune des extrémités des tubes est emmanchée à force sur une pièce de liaison présentant une double conicité et une rainure circulaire entre les deux cônes. Les extrémités des tubes sont serties dans la rainure à l'aide d'un outil à deux branches articulées comportant une molette. Toutefois, ce document n'enseigne pas un procédé permettant la fixation d'un tube à paroi mince entre une bague et un manchon tronconiques.

La présente invention a donc pour objet un procédé de fixation d'un tube sur un manchon qui remédie à ces inconvénients, rendant impossible le desserrage.

Le procédé pour la réalisation de la fixation d'une au moins des extrémités d'un tube mince entre une bague et un manchon, se caractérise en ce que:

– on enfile la bague sur le tube;
– on positionne un manchon sur un mandrin;
– on enfile le tube sur le mandrin en laissant l'extrémité du tube dépasser le manchon,
– on chauffe l'extrémité du tube qui dépasse du manchon afin de provoquer sa fusion et la formation d'un bourrelet.

De préférence, afin de faciliter le montage du tube sur le manchon, le mandrin a une forme profilée et possède un diamètre variable, notamment au niveau du diamètre minimal du manchon.

Selon une première variante, la fusion du tube et la formation due bourrelet s'effectuent avant la mise en place de la bague sur le manchon.

Selon une deuxième variante, la fusion du tube et la formation due bourrelet s'effectuent après la mise en place de la bague sur le manchon.

Enfin, la présente invention a pour objet des dispositifs pour la réalisation du procédé.

Selon un premier mode de réalisation le dispositif comporte :

– un mandrin présentant une partie supérieure conique, une partie centrale et une embase , la partie centrale étant mobile entre la partie supérieure conique et l'embase, son déplacement provoquant une variation de son diamètre,
– un épaulement de butée du tube, usiné dans l'embase, destiné à définir une position de référence pour l'extrémité du tube,
– un épaulement de butée du manchon, usiné dans l'embase, destiné à définir une position du manchon, les épaulements des butées de tube et de manchon étant espacés d'une quantité déterminée de manière à laisser un dépassement du tube par rapport au manchon, en fonction du bourrelet souhaité,
– une partie mobile, comportant des moyens de chauffage, ladite partie mobile pouvant être déplacée entre une première position dans laquelle les moyens de chauffage sont situés en regard de la partie du mandrin comprise entre l'épaulement du tube et l'épaulement du manchon et une deuxième position dans laquelle les moyens de chauffage sont escamotés.

Selon une disposition particulière de ce mode de réalisation le mandrin comporte un réflecteur disposé entre l'épaulement positionnant le tube et l'épaulement positionnant le manchon.

Selon une autre disposition particulière de ce mode de réalisation les moyens de chauffage sont constitués par un anneau rayonnant disposé circonférentiellement autour du mandrin et placé en regard de la partie du mandrin située entre les épaulements de butées de tube et de manchon.

Selon un deuxième mode de réalisation le dispositif comporte :

– un mandrin présentant une partie supérieure conique, une partie centrale et une embase, la partie centrale étant mobile entre la partie supérieure conique et l'embase, son déplacement provoquant une variation de son diamètre,
– un épaulement de butée de tube, usiné dans l'embase, destiné à définir une position de référénce pour l'extrémité du tube,
– un épaulement de butée de manchon, usiné dans l'embase, destiné à définir une position de référence du manchon, les épaulements des butées du tube et du manchon étant espacés d'une quantité déterminée de manière à laisser un dépassement du tube par rapport au manchon en fonction du bourrelet à réaliser,
– un moyen de chauffage constitué de deux demi-mâchoires escamotables latéralement.

Selon un troisième mode de réalisation le dispositif comporte :

– un mandrin présentant une partie supérieure conique, une partie centrale et une embase, la partie centrale étant mobile entre la partie supérieure conique et l'embase, son déplacement provoquant un changement de diamètre,
– un épaulement de butée de tube, mobile latéralement, destiné à définir une position de référence de l'extrémité du tube,
– un épaulement de manchon, usiné dans l'embase, destiné à définir une position de référence du manchon, les épaulements des butées de tube et de manchon étant espacés d'une quantité déterminée de manière à laisser un dépassement du tube par rapport au manchon, fonction du bourrelet souhaité,

— une partie mobile comportant des moyens de chauffage, ladite partie mobile pouvant être déplacée, après enlèvement de l'épaulement de butée de tube, afin de fondre l'extrémité du tube.

D'autres caractéristiques et avantages de l'invention apparaîtront encore à la lecture de la description qui suit, faite en référence aux dessins annexés, donnée à titre illustratif.

Sur ces figures:

— la figure 1 est une vue partiellement en coupe d'une fixation d'un tube conformant à l'invention,

— la figure 2 illustre un premier dispositif de mise en œuvre du procédé de fixation d'un tube conformément à l'invention,

— la figure 3 illustre une variante de réalisation de la figure 2,

— la figure 4 illustre une autre variante de réalisation de la figure 2,

- la figure 5 enfin, illustre une troisième variante de réalisation de l'invention, la bague étant déjà mise en place sur le manchon.

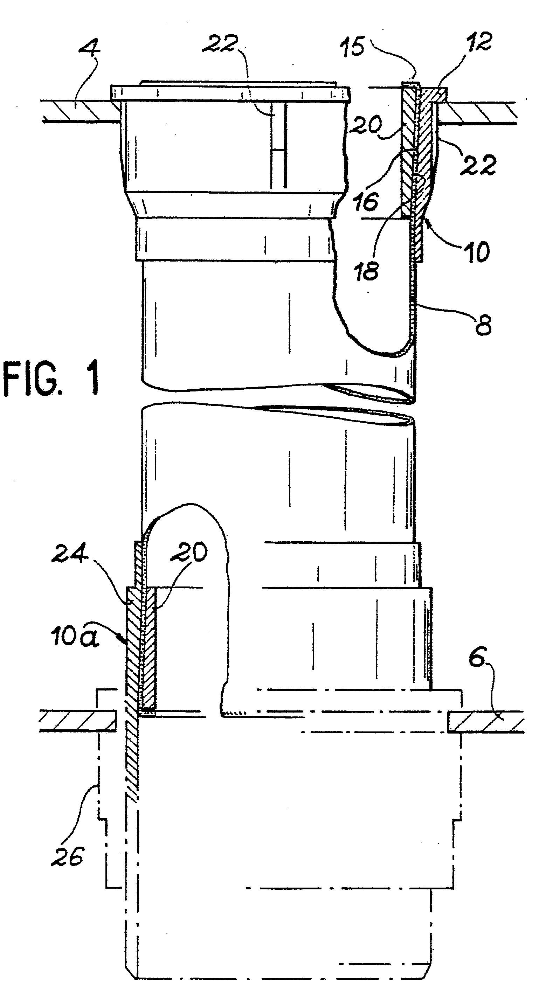

Sur la figure 1, la fixation d'un tube 8 représentée à la partie supérieure de la figure 1 se compose d'une bague 10 et d'un manchon 20. La bague 10 est disposée dans un trou d'une plaque à tubes 4. Afin de permettre un ajustement précis de la bague dans le trou de la plaque 4, la périphérie de la bague 10 comporte des surépaisseurs longitudinales, appelées godrons 22, qui permettent d'absorber les différents jeux causés par les tolérances sur le diamètre de la bague elle-même et sur le diamètre de perçage des trous dans la plaque 4.

La bague comporte un épaulement 12 par lequel elle repose sur la face supérieure de la plaque. A l'intérieur de la bague, on trouve un alésage tronconique 16. Le manchon 20 comporte une forme extérieure tronconique 18 de même conicité et destiné à coopérer avec l'alésage de la bague 10.

Le tube 8 est un tube en matière plastique de faible épaisseur, par exemple inférieure à 500 µm, de préférence comprise entre 30 et 200 µm et comporte, selon l'invention, un bourrelet 15. Il est réalisé en une matière plastique telle que le polyéthylène, le polypropylène, le polyfluorure de vinylidène ou un polyamide.

A la partie inférieure de la figure 1, on a représenté une variante de réalisation dans laquelle la bague 10a montée sur la plaque 6, au lieu d'être réalisée en une seule partie, se compose de plusieurs parties assemblées. Dans l'exemple représenté, la bague 10a se compose d'un cylindre 24 et d'une collerette 26.

Selon une autre réalisation, la bague pourrait être composée de trois parties ou plus.

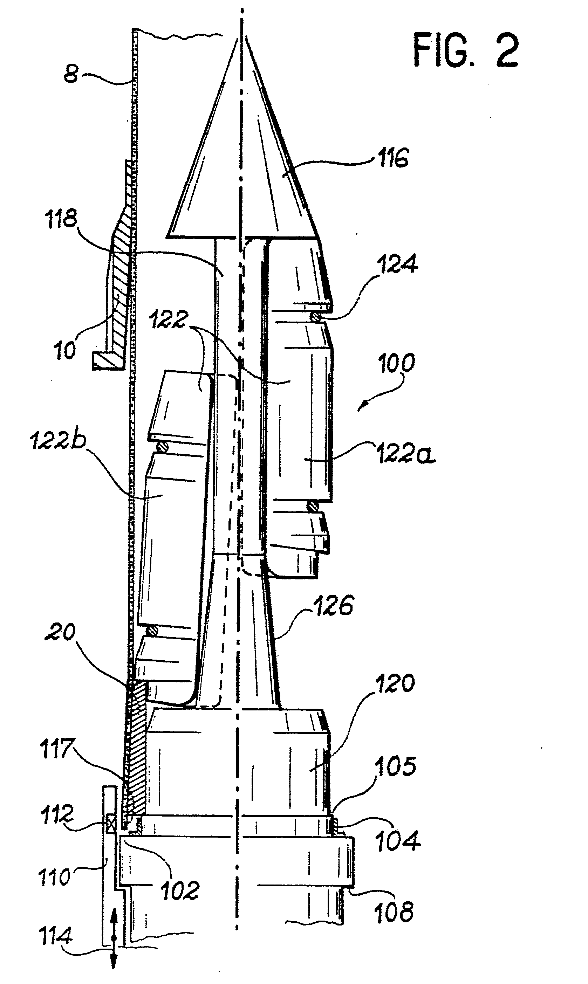

La figure 2 décrit un mandrin 100 permettant de réaliser un bourrelet à l'extrémité du tube 8.

Ce mandrin 100 est constitué :

- d'une partie supérieure conique 116, supportée par un axe central 118 fixé à une embase 120,

- d'une partie centrale 122, mobile longitudinalement entre la base de la partie supérieure conique 116 et la face supérieure de l'embase 120, cette partie centrale 122 étant constituée de plusieurs segments maintenus plaqués contre l'axe central 118 par des moyens élastiques de rappel 124, La partie inférieure 126 de l'axe central 118 est de forme tronconique, afin que les différents segments, lors du mouvement de ces derniers (constituant la pièce 122) vers l'embase 120, provoquent une augmentation du diamètre de la pièce centrale 122, celui-ci s'ajustant alors au diamètre extérieur du manchon 20.

Sur cette figure 2, on a représenté, dans sa partie droite un des segments 122a, de la pièce 122 en position haute, c'est-à-dire dans celle où le diamètre de la pièce 122 est identique sur toute sa longueur. Dans la partie gauche de cette figure, on a représenté la pièce 122 dont un des segments 122b est en partie basse. Dans cette position le diamètre inférieur de la pièce 122 a augmenté. Sur cette figure 2, la pièce 122 est formée de deux segments, d'angles au centre égaux à 180°. Bien entendu, on pourrait prévoir une même pièce 122 constituée d'un plus grand nombre de segments, quatre par exemple, d'angles au centre égaux à 90°.

Le mandrin 100 comporte sur son embase 120 un premier épaulement 102 qui sert de butée de référence pour la position du tube 8. Un réflecteur 104 est monté sur l'épaulement 102. Le mandrin 100 comporte un deuxième épaulement 105 qui sert de butée de référence pour la position du manchon 20. Enfin, il comporte un troisième épaulement 108 qui sert de butée de référence pour la position d'une partie mobile 110. Cette partie mobile comporte des moyens de chauffage 112 disposés circonférentiellement. La partie mobile 110 peut être déplacée alternativement par rapport au mandrin 100, comme schématisé par les flèches 114. Lorsqu'elle est poussée vers le haut, comme représenté sur la figure 2, jusqu'a ce qu'elle vienne en butée contre l'épaulement 108, les moyens de chauffage 112 se trouvent en regard du réflecteur 104. La mise en oeuvre de ce dispositif est la suivante.

Tout d'abord, la bague 10 est montée sur le tube 8, et le manchon 20 est introduit sur l'embase 120 du mandrin 100, puis la partie centrale 122 est descendue de sa position haute à sa position basse pour plaquer le manchon 20 sur l'épaulement 105. Le tube 8 est alors enfilé, légèrement en force, sur le manchon en laissant dépasser une longueur bien déterminée 117 de ce tube à l'extérieur du manchon 20. Cette longueur a été prévue pour donner un bourrelet 15 de dimensions convenables après fusion. Grâce au dispositif représenté sur la figure 2, la longueur du bourrelet est obtenue automatiquement par la différence entre la position du manchon 20 donnée par l'épaulement 105 et la position du tube 8 qui vient en butée contre l'épaulement 102. On déplace alors la partie mobile 110, ce qui amène les moyens de chauffage 112 en regard du réflecteur 104 et de la partie dépassante 117. Dans l'exemple de réalisation représenté, les moyens de chauffage 112 sont contitués par un anneau rayonnant. Cet anneau fond la partie 117. Le réflecteur 104 limite les déperditions de chaleur. Un bourrelet 15 se forme par l'apparition d'une goutte fondue à la périphérie du tube 8. On escamote alors la partie mobile 110 et on repousse la bague 10 vers le bas, en considérant la figure 2, de manière à l'emmancher sur le manchon 20 et sur la partie du tube correspondante. Le bourrelet 15 est rabattu vers l'intérieur par la mise en place de la bague 10. L'ensemble est enlevé du mandrin 100 par simple traction du tube 8. On a décrit dans cet exemple de réalisation la formation du bourrelet par un chauffage électrique. Bien évidemment, tout autre moyen permettant la fusion du tube 8 à son extrémité pourrait être utilisé (air chaud par exemple).

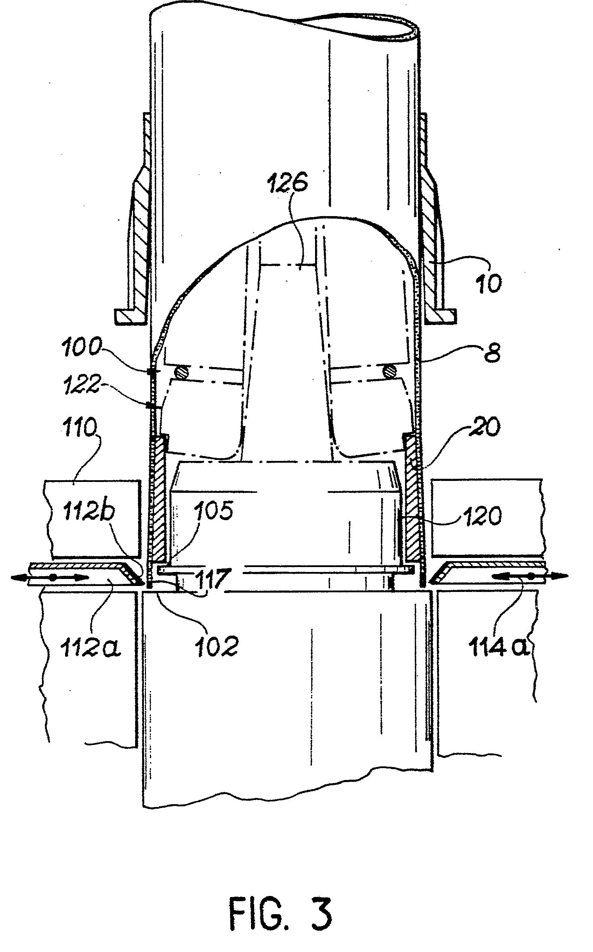

On représenté sur la figure 3 une variante de réalisation du dispositif pour la mise en oeuvre du procédé de l'invention. Dans ce mode de réalisation, les moyens pour le chauffage et la fusion de la partie 117 du tube qui dépasse du manchon 20 sont constitués par deux demi-mâchoires chauffantes désignées par la référence 112a. Elles sont escamotables selon une direction radiale, comme schématisé par les flèches 114a. Elles sont recouvertes d'une couche anti-adhésive 112b. La mise en oeuvre de ce dispositif est identique à celle du dispositif décrit en référence à la figure 2.

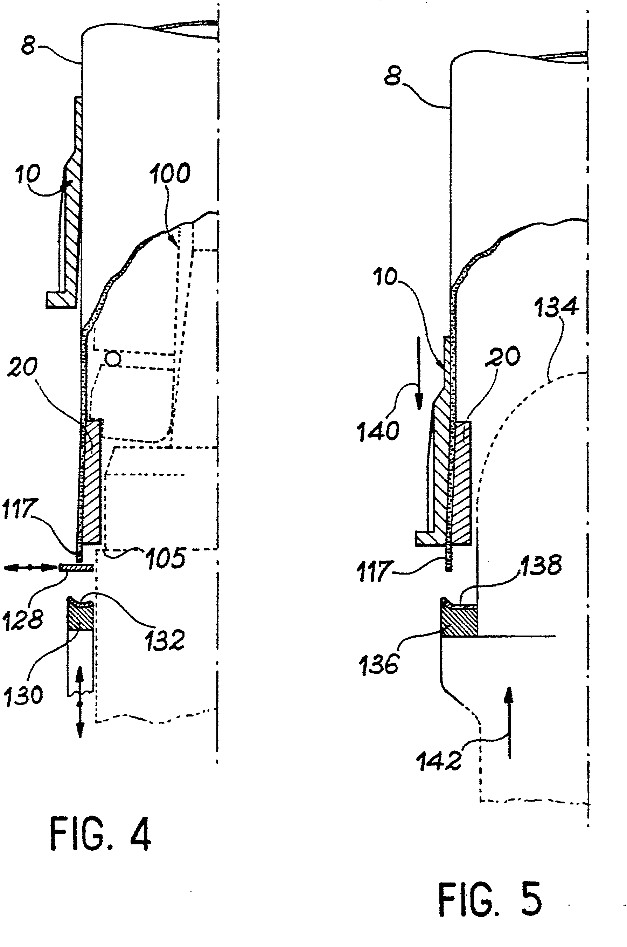

On a représenté sur la figure 4 une variante du dispositif permettant la réalisation du bourrelet avant la mise en place de la bague 10 de serrage. Dans cette variante le tube 8 est emmanché comme précédemment sur le manchon 20. La longueur 117 du tube 8 à fondre est déterminée par un épaulement fixe du mandrin 105 et un épaulement annulaire mobile 128. Le bourrelet est ici formé par déplacement vers le haut d'un moyen de chauffage annulaire 130 dont la partie supérieure est recouverte d'une couche antiadhésive 132.

La formation du bourrelet selon cette variante s'effectue comme suit. Le tube 8 est enfilé sur le manchon 20 grâce au mandrin précédemment décrit, la longueur du tube 8 à fondre étant déterminée par l'écartement des deux épaulements 105 et 128. L'épaulement mobile 128 est éclipsé (ici par déplacement vers la gauche). Le moyen de chauffage 130 est déplacé vers le haut, effectue la fusion sur la longueur souhaitée, puis reprend sa position initiale, la bague 10 est ensuite mise en place. Après extraction du tube 8 et du manchon 20, l'appareil est alors prêt pour une nouvelle opération, l'épaulement mobile 128 ayant repris sa position utilitaire.

On a représenté sur la figure 5 une autre variante d'un dispositif permettant la réalisation du bourrelet de fixation selon l'invention. Dans cette variante la formation de ce bourrelet se fait après mise en place du tube 8 entre la bague 10 et le manchon 20. L'ensemble bague-tube-manchon est enfilé sur un mandrin 134 comportant un moyen de chauffage 136 dont la partie supérieure est garnie d'une couche antiadhésive 138. Le rapprochement suivant les flèches 140 et 142 de l'ensemble bague-tube-manchon vers le moyen de chauffage permet la réalisation du bourrelet 15. Après extraction de l'ensemble bague-tube-manchon du mandrin 134, le dispositif est prêt à effectuer une nouvelle opération.

## Revendications

1. Procédé pour la réalisation de la fixation d'une au moins des extrémités d'un tube mince (8) entre une bague (10) présentant un alésage tronconique et un manchon (20) comportant une forme extérieure tronconique, de même conicité que celle dudit alésage, caractérisé en ce que:
   – on enfile la bague (10) sur le tube (8);
   – on positionne le manchon (20) sur un mandrin (100);
   – on enfile le tube (8) sur le mandrin (100) en laissant l'extrémité du tube (117) dépasser le manchon (20);
   – on chauffe l'extrémité (117) du tube (8) qui dépasse du manchon (20) afin de provoquer sa fusion et la formation d'un bourrelet (15).

2. Dispositif pour la mise en œuvre du procédé de la revendication 1, caractérisé en ce qu'il comporte:
   – un mandrin (100) présentant une partie supérieure conique (116), une partie centrale (122) et une embase (120), la partie centrale (122) étant mobile entre la partie supérieure conique (116) et l'embase (120), son déplacement provoquant un changement de son diamètre;
   – un épaulement de butée de tube (102), usiné dans l'embase (120), destiné à définir une position de référence pour l'extrémité du tube (8);
   – un épaulement de butée du manchon (105), usiné dans l'embase (120), destiné à définir une position de référence du manchon (20); les épaulements des butées du tube (102) et du manchon (105) étant espacés d'une quantité déterminée de manière à laisser dépasser une longueur (117) du tube, déterminée en fonction du bourrelet (15) à réaliser,
   – une partie mobile (110) comportant des moyens de chauffage (112), ladite partie mobile pouvant être déplacée entre une première position dans laquelle des moyens de chauffage (112) sont situés en regard de la partie du mandrin (100) comprise entre l'épaulement du tube (102) et l'épaulement du manchon (105) et une deuxième position dans laquelle les moyens de chauffage sont escamotés.

3. Dispositif selon la revendication 2, caractérisé en ce que le mandrin (100) comporte un réflecteur (104) disposé entre l'épaulement de tube (102) et l'épaulement de manchon (105).

4. Dispositif selon l'une quelconque des revendications 2 et 3, caractérisé en ce que les moyens de chauffage sont constitués par un anneau rayonnant (112) disposé circonférentiellement autour du mandrin (100) et situé en regard de la partie du mandrin située entre les épaulements de tube (102) et de manchon (105).

5. Dispositif pour la mise en œuvre du procédé de la revendication 1, caractérisé en ce qu'il comporte:
   – un mandrin (100) présentant une partie supérieure conique (116), une partie centrale (122) et une embase (120), la partie centrale étant mobile entre la partie supérieure conique (116) et l'embase (120), son déplacement provoquant une variation de son diamètre,

– un épaulement de butée de tube (102), usiné dans l'embase (120), destiné à définir une position de référence pour l'extrémité du tube (8),

– un épaulement de butée de manchon (105), usiné dans l'embase (120), destiné à définir une position de référence du manchon (20); les épaulements des butées du tube (102) et du manchon (105) étant espacés d'une quantité déterminée de manière à laisser un dépassement du tube (8) par rapport au manchon (20), en fonction du bourrelet (15) à réaliser,

– un moyen de chauffage (112a) constitué par deux demi mâchoires escamotables latéralement.

6. Dispositif pour la mise en œuvre du procédé de la revendication 1, caractérisé en ce qu'il comporte:

– un mandrin (100) présentant une partie supérieure conique (116), une partie centrale (122) et une embase (120), la partie centrale (122) étant mobile entre la partie supérieure conique (116) et l'embase (120), son déplacement provoquant un changement de son diamètre,

– un épaulement de butée de tube (128), mobile latéralement, destiné à définir une position de référence de l'extrémité du tube (8),

– un épaulement de manchon (105), usiné dans l'embase (120), destiné à définir une position de référence du manchon (20); les épaulements des butées du tube (128) et de manchon (105) étant espacés d'une quantité déterminée de manière à laisser un dépassement du tube (8) par rapport au manchon (20), en fonction du bourrelet (15) souhaité,

– une partie mobile (130) comportant des moyens de chauffage, ladite partie mobile pouvant être déplacée, après enlèvement de l'épaulement (128) de butée du tube vers le tube (8) afin de fondre la partie (117) dudit tube.

**Patentansprüche**

1. Verfahren zur Verwirklichung der Befestigung mindestens eines der Enden eines dünnwandigen Rohres (8) zwischen einem Ring (10) mit einer kegelstumpfförmigen Bohrung und einer Hülse (20) mit einer kegelstumpfförmigen Außenform der gleichen Konizität wie die der Bohrung, dadurch gekennzeichnet, daß

– der Ring (10) auf dem Rohr (8) aufgereiht wird:

– die Hülse (20) auf einem Dorn (100) positioniert wird;

– das Rohr (8) auf dem Dorn (100) aufgereiht wird, wobei das Ende des Rohres (117) die Hülse (20) überragt:

– das Ende (117) des Rohres (8), welches die Hülse (20) überragt, geheizt wird, um sein Schmelzen und die Bildung eines Wulstes (15) einzuleiten.

2. Vorrichtung zur Ausführung des Verfahrens nach Anspruch 1, gekennzeichnet durch

– einen Dorn (100) mit einem konischen Oberteil (116), einem Mittelteil (122) und einer Fußplatte (120), wobei das Mittelteil (122) zwischen dem konischen Oberteil (116) und der Fußplatte (120) beweglich ist und eine Verschiebung eine Veränderung seines Durchmessers auslöst;

– eine Schulter (102) als Rohranschlag, die in der Fußplatte (120) eingearbeitet ist und bestimmt ist, eine Bezugsposition für das Ende des Rohres (8) zu definieren;

– eine Schulter (105) als Hülsenanschlag, die in der Fußplatte (120) eingearbeitet ist und bestimmt ist, eine Bezugsposition für die Hülse (20) zu definieren, wobei die Schultern (102, 105) als Anschläge für das Rohr und die Hülse zueinander einen Abstand einer Größe aufweisen, die so festgelegt ist, daß sie eine Länge (117) des Rohres überstehen läßt und in Abhängigkeit von der zu verwirklichenden Wulst (15) festgelegt ist,

– einen beweglichen Teil (110), der Heizeinrichtungen (112) umfaßt, wobei der bewegliche Teil zwischen einer ersten Position, in welcher Heizeinrichtungen (112) gegenüber dem Teil des Dorns (100) liegen, der zwischen der Schulter (102) für das Rohr und der Schulter (105) für die Hülse eingeschlossen ist, und einer zweiten Position, in welcher die Heizeinrichtungen abgedeckt sind, verschoben werden kann.

3. Vorrichtung nach Anspruch 2, dadurch gekennzeichnet, daß der Dorn (100) einen Reflektor (104) umfaßt, der zwischen der Schulter (102) für das Rohr und der Schulter (105) für die Hülse angeordnet ist.

4. Vorrichtung nach einem der Ansprüche 2 und 3, dadurch gekennzeichnet, daß die Heizeinrichtungen durch einen Strahlungsring (112) gebildet sind, der am Umfang um den Dorn (100) herum angeordnet ist und gegenüber dem Teil des Dorns, der zwischen den Schultern (102, 105) für das Rohr und die Hülse liegt, sitzt.

5. Vorrichtung zur Ausführung des Verfahrens nach Anspruch 1, gekennzeichnet durch

– einen Dorn (100) mit einem konischen Oberteil (116), einem Mittelteil (122) und einer Fußplatte (120), wobei das Mittelteil (122) zwischen dem konischen Oberteil (116) und der Fußplatte (120) beweglich ist und seine Verschiebung eine Veränderung seines Durchmessers auslöst;

– eine Schulter (102) als Rohranschlag, die in der Fußplatte (120) eingearbeitet ist und bestimmt ist, eine Bezugsposition für das Ende des Rohres (8) zu definieren;

– eine Schulter (105) als Hülsenanschlag, die in die Fußplatte (120) eingearbeitet ist und bestimmt ist, eine Bezugsposition für die Hülse (20) zu definieren; wobei die Schultern (102, 105) als Anschläge für das Rohr und die Hülse zueinander einen Abstand einer Größe aufweisen, die so festgelegt ist, daß ein Überragen des Rohres (8) in bezug auf die Hülse (20) in Abhängigkeit von dem zu verwirklichenden Wulst (15) zugelassen ist,

– eine Heizeinrichtung (112a), die aus zwei seitlich einziehbaren Halbbacken gebildet ist.

6. Vorrichtung zur Ausführung des Verfahrens nach Anspruch 1, gekennzeichnet durch

– einen Dorn (100) mit einem konischen Oberteil (116),

– einem Mittelteil (122) und einer Fußplatte (120), wobei das Mittelteil (122) zwischen dem konischen Oberteil (116) und der Fußplatte (120) beweglich ist und seine Verschiebung eine Veränderung seines Durchmessers auslöst;

– eine Schulter (128) als Rohranschlag, die seitlich beweglich ist und bestimmt ist, eine Bezugsposition für das Ende des Rohres (8) zu definieren;

– eine Schulter (105) für die Hülse, die in der Fußplatte (120) eingearbeitet ist und bestimmt ist, eine Bezugsposition für die Hülse (20) zu definieren; wobei die Schultern (102, 105) als Anschläge für das Rohr und die Hülse zueinander einen Abstand einer Größe aufweisen, die so festgelegt ist, daß ein Überragen des Rohres (8) in bezug auf die Hülse (20) in Abhängigkeit von dem gewünschten Wulst (15) zugelassen ist,

– einen beweglichen Teil (130), der Heizeinrichtungen umfaßt, wobei der bewegliche Teil, nach der Entfernung der Schulter (128) des Rohranschlages, in Richtung des Rohres (8) verschoben werden kann, um den Teil (117) des Rohres zu schmelzen.

## Claims

1. Method for achieving the fixing of at least one of the ends of a thin tube (8) between a ring (10) having a frustoconical bore and a sleeve (20) having a frustoconical external shape, with the same conicity as that of the said bore, characterized in that:

– the ring (10) is fitted onto the tube (8);

– the sleeve (20) is positioned on a chuck (100);

– the tube (8) is fitted onto the chuck (100) allowing the end (117) of the tube to protrude beyond the sleeve (20);

– the end (117) of the tube (8) which protrudes beyond the sleeve (20) is heated so as to cause melting thereof and the formation of a bead (15).

2. Device for implementing the method according to Claim 1, characterized in that it comprises:

– a chuck (100) having a conical upper part (116), a central part (122) and a base (120), the central part (122) being movable between the conical upper part (116) and the base (120), its displacement causing a change in its diameter;

– a tube stopping shoulder (102), machined into the base (120), intended to define a reference position for the end of the tube (8);

– a sleeve stopping shoulder (105), machined into the base (120), intended to define a reference position for the sleeve (20); the tube stopping shoulder (102) and the sleeve stopping shoulder (105) being separated by a given amount so as to allow a length (117) of the tube to protrude, said length being determined according to the bead (15) to be formed;

– a movable part (110) comprising heating means (112), the said movable part being capable of being displaced between a first position in which heating means (112) are located opposite the part of the chuck (100) between the tube shoulder tube (102) and the sleeve shoulder (105) and a second position in which the heating means are retracted.

3. Device according to Claim 2, characterized in that the chuck (100) comprises a reflector (104) arranged between the tube shoulder (102) and the sleeve shoulder (105).

4. Device according to either one of Claims 2 and 3, characterized in that the heating means consist of a radiating ring (112) arranged circumferentially around the chuck (100) and located opposite the part of the chuck situated between the tube shoulder (102) and the sleeve shoulder (105).

5. Device for implementing the method according to Claim 1, characterized in that it comprises:

– a chuck (100) having a conical upper part (116), a central part (122) and a base (120), the central part being movable between the conical upper part (116) and the base (120), its displacement causing a variation in its diameter;

– a tube stopping shoulder (102), machined into the base (120), intended to define a reference position for the end of the tube (8):

– a sleeve stopping shoulder (105), machined into the base (120), intended to define a reference position for the sleeve (20); the tube stopping shoulder (102) and the sleeve stopping shoulder (105) being separated by a given amount so as to allow the tube (8) to protrude relative to the sleeve (20), according to the bead (15) to be formed;

– a heating means (112a) consisting of two laterally retractable half-jaws.

6. Device for implementing the method according to Claim 1, characterized in that it comprises:

– a chuck (100) having a conical upper part (116), a central part (122) being movable between the conical upper part (116) and the base (120), its displacement causing a change in its diameter;

– a tube stopping shoulder (128), movable laterally, intended to define a reference position for the end of the tube (8);

– a sleeve shoulder (105), machined into the base (120), intended to define a reference position for the sleeve (20); the tube stopping shoulder (128) and the sleeve stopping shoulder (105) being separated by a given amount so as to allow the tube (8) to protrude relative to the sleeve (20), according to the bead (15) required;

– a movable part (130) comprising heating means, the said movable part being capable of being displaced, after removal of the tube stopping shoulder (128), towards the tube (8) so as to melt the part (117) of the said tube.

FIG. 1

FIG. 2

8

116

118

124

10

122

100

122b

122a

20

126

117

120

112

105

110

104

114

102

108

FIG. 3

EP 0 193 425 B1

FIG. 4

FIG. 5